# EUROPÄISCHE PATENTANMELDUNG

(11) **EP 3 974 233 A1**
(43) Veröffentlichungstag der Anmeldung: **30.03.2022**
(21) Anmeldenummer: 21197856.4
(22) Anmeldetag: 20.09.2021
(51) Int. Cl.: B60L 5/00, B60L 53/66

(54) **VERFAHREN ZUM ANSTEUERN EINES STROMABNEHMERS EINES STRASSENGEFÜHRTEN KRAFTFAHRZEUGES, STRASSENGEFÜHRTES KRAFTFAHRZEUG UND DATENBANK**

(30) Priorität: 25.09.2020 DE 102020212067
(71) Anmelder: VOLKSWAGEN AG, 38440 Wolfsburg (DE)
(72) Erfinder: SUE, Armin, 38527 Meine (DE); SCHRÖDER, Hendrik, 38173 Sickte (DE)
(74) Vertreter: FDST Patentanwälte

(57) **Zusammenfassung**

Die Erfindung betrifft ein Verfahren zum Ansteuern eines Stromabnehmers (2) eines straßengeführten Kraftfahrzeugs (1), mittels mindestens einer Aktorik (5), um den Stromabnehmer (2) von einer ersten abgebügelten Position in eine zweite angebügelte Position oder umgekehrt zu steuern und/oder um einen Anpressdruck (8) des Stromabnehmers (2) zu erhöhen oder zu erniedrigen, wobei in einer Datenbank (13) lokale Störstellen abgelegt sind, wobei der Stromabnehmer (2) in Abhängigkeit der lokalen Störstellen angesteuert wird, ein straßengeführtes Kraftfahrzeug (1) sowie eine Datenbank (13).

## Beschreibung

Die Erfindung betrifft ein Verfahren zum Ansteuern eines Stromabnehmers eines straßengeführten Kraftfahrzeugs, ein straßengeführtes Kraftfahrzeug und eine Datenbank.

Es ist bekannt, straßengeführte Kraftfahrzeuge mit mindestens einem Stromabnehmer auszubilden, um elektrische Energie von mindestens einer Oberleitung dem Kraftfahrzeug zuzuführen. Die Stromabnehmer werden auch als Pantographen bezeichnet. Dabei kann die elektrische Energie zum Vortrieb des Kraftfahrzeugs genutzt werden und zusätzlich eine Hochvoltbatterie geladen werden, sodass insgesamt die Reichweite solcher elektrischer oder hybriden Fahrzeuge erhöht wird.

Bei straßengeführten Kraftfahrzeugen tritt dabei das Problem auf, dass es aufgrund von Fahrbahnunebenheiten oder Fahrbahnschäden dazu kommen kann, dass der Kontakt zwischen Stromabnehmer und Oberleitung abreißt. Hierdurch kann es zu einem schädlichen Lichtbogen und Überspannungen kommen, die verhindert werden müssen. Zur Lösung könnte die Anpresskraft dauerhaft erhöht werden, was jedoch den Abrieb und somit den Verschleiß erhöht.

Aus der DE 103 37 006 A1 ist ein Verfahren zur Verbesserung des Fahrkomforts von Kraftfahrzeugen bekannt, wobei im Fahrbetrieb mittels eines oder mehrerer Sensoren wenigstens der aktuelle Fahrbahnzustand im Hinblick auf Fahrbahnunebenheiten erfasst und einer Auswerte- und Steuereinheit zugeführt wird, dort die erfassten Messwerte mit einem vorgegebenen Referenzwert verglichen werden und bei Vorliegen einer bestimmten Abweichung ein Signal zur Ansteuerung von regelbaren Dämpfern des Fahrwerks bereitgestellt wird. Dabei wird in Abhängigkeit von der aktuellen oder einer vorbestimmten maximalen Fahrgeschwindigkeit des Kraftfahrzeugs der Sensor derart schräg nach vorn auf die Fahrbahn gerichtet, dass aufgrund etwaig sensierter Fahrbahnunebenheiten genügend Reaktionszeit zur rechtzeitigen Erstellung von Signalen zur Ansteuerung sowie zur Anpassung sämtlicher Dämpfer des Fahrwerks an die Fahrbahnunebenheiten zur Verfügung steht. Ein ähnliches Verfahren ist aus der EP 0 412 719 A1 bekannt.

Aus der GB 2510672 A ist ein weiteres Verfahren bekannt, wobei in Abhängigkeit der erfassten Fahrbahnunebenheiten die Geschwindigkeit angepasst wird.

Der Erfindung liegt das technische Problem zugrunde, ein Verfahren zum Ansteuern eines Stromabnehmers eines straßengeführten Kraftfahrzeugs zu verbessern. Ein weiteres technisches Problem ist die Schaffung eines geeigneten straßengeführten Kraftfahrzeugs sowie einer Datenbank.

Die Lösung des technischen Problems ergibt sich durch ein Verfahren mit den Merkmalen des Anspruchs 1, ein straßengeführtes Kraftfahrzeug mit den Merkmalen des Anspruchs 12 sowie eine Datenbank mit den Merkmalen des Anspruchs 13. Weitere vorteilhafte Ausgestaltungen der Erfindung ergeben sich aus den Unteransprüchen.

Das Verfahren zum Ansteuern eines Stromabnehmers eines straßengeführten Kraftfahrzeugs erfolgt mittels mindestens einer Aktorik, um den Stromabnehmer von einer ersten abgebügelten Position in eine zweite angebügelte Position oder umgekehrt zu steuern und/oder um einen Anpressdruck des Stromabnehmers zu erhöhen oder zu erniedrigen. Dabei sind in einer Datenbank lokale Störstellen abgelegt, wobei der Stromabnehmer in Abhängigkeit der lokalen Störstellen angesteuert wird. Somit kann bereits frühzeitig auf Kontaktprobleme zwischen Stromabnehmer und Oberleitung reagiert werden, sodass Kontaktabrisse und Lichtbogenbildungen vermieden bzw. reduziert werden können.

Ein weiterer Vorteil ist, dass die mittlere Anpresskraft im Vergleich zu herkömmlichen Verfahren verringert werden kann, sodass Verschleiß und Reibung reduziert werden können. Der Grund dafür ist, dass in Bereichen ohne Störstellen die Anpresskraft reduziert werden kann, wohingegen im Stand der Technik ohne Kenntnis der Störstellen eine höhere mittlere Anpresskraft eingestellt werden muss.

Dabei kann die Datenbank in dem Kraftfahrzeug sein oder aber es handelt sich um eine externe Datenbank, die die Daten über die lokalen Störstellen dem Kraftfahrzeug zur Verfügung stellt und beispielsweise übermittelt.

Bei den lokalen Störstellen kann es sich um Fahrbahnunebenheiten (z.B. Schlaglöcher), Trennstellen der Teilnetze der Oberleitungen und/oder lokale Störung oder Änderungen der Oberleitungsführung (z.B. an Brücken) handeln.

In einer Ausführungsform wird in Abhängigkeit der lokalen Störstelle der Stromabnehmer von der zweiten angebügelten Position in die erste abgebügelte Position gesteuert oder die Stromübertragung wird geregelt abgeschaltet, sodass Lichtbogenbildungen oder Überspannungen vermieden werden. Dies kommt insbesondere zur Anwendung, wenn auch durch eine Erhöhung der Anpresskraft aufgrund der Störstelle ein Abriss nicht verhindert werden kann.

Dabei kann in einer Ausführungsform weiter vorgesehen sein, dass in Abhängigkeit der lokalen Störstelle ein Schwellwert, ab dem der Stromabnehmer abgebügelt wird oder die Stromübertragung geregelt abgeschaltet wird, angepasst wird.

In einer weiteren Ausführungsform wird in Abhängigkeit der lokalen Störstelle die Anpresskraft des Stromabnehmers erhöht oder erniedrigt. So kann beispielsweise vor dem Überfahren eines Schlagloches die Anpresskraft erhöht werden, um ein Abreißen des Kontaktes zu verhindern. Entsprechend kann bei einer Erniedrigung der Oberleitung an Brücken die Anpresskraft erniedrigt werden.

Dabei kann vorgesehen sein, dass bei einer Erhöhung der Anpresskraft eine maximale Anpresskraft eingestellt wird. Dabei kann vorgesehen sein, dass zwischen einer minimalen und maximalen Anpresskraft gewechselt wird. Es können aber auch Anpresskräfte unterhalb der maximalen Anpresskraft eingestellt werden. Ebenso kann die im Normalbetrieb eingestellte Anpresskraft größer als die minimale Anpresskraft sein.

In einer weiteren Ausführungsform erfolgen die Erhöhungen oder Verringerungen der Anpresskraft rampenförmig. Hierdurch wird die Gefahr reduziert, die Oberleitung in Schwingung zu versetzen, was wiederum die Gefahr von Kontaktabrissen erhöhen würde.

In einer alternativen Ausführungsform erfolgen die Erhöhungen oder Verringerungen der Anpresskraft mittels einer ruckfreien Funktion, d.h. die erste Ableitung der Anpresskraft-Funktion bzw. der Übergangsfunktion ist stetig. Hierdurch kann die Schwingungsanregung noch besser unterdrückt werden. Beispielsweise ist die Übergangsfunktion von der minimalen zur maximalen Anpresskraft bzw. umgekehrt als Polynomfunktion höherer Ordnung (z.B. dritter Ordnung) oder als sinusförmige Funktion ausgebildet, so wie diese zwischen 0° und 90° bzw. 90° und 180° verläuft.

In einer weiteren Ausführungsform überträgt das Kraftfahrzeug Daten von unbekannten Störstellen an die Datenbank und/oder Daten von abgefahrenen, lokalen Störstellen an die Datenbank. Im ersten Fall übermittelt das Kraftfahrzeug Störstellen an die Datenbank, sodass die Datenbank selbstlernend ist. Die unbekannten Störstellen können durch das Kraftfahrzeug sensorisch erfasst werden. Alternativ oder ergänzend kann das Ereignis zusammen mit Ortskoordinaten übermittelt werden. Fährt beispielsweise das Kraftfahrzeug über eine unbekannte Fahrbahnunebenheit, woraufhin es zu einem Kontaktabriss zwischen Stromabnehmer und Oberleitung kommt, so kann dies an die Datenbank übermittelt werden. Entsprechend kann der Datenbank auch mitgeteilt werden, ob eine vorausschauende Reaktion auf eine lokale Störstelle erfolgreich war. Hat beispielsweise das Kraftfahrzeug vor Überfahren einer Fahrbahnunebenheit die Anpresskraft auf die maximale Anpresskraft erhöht und ist es dennoch zu einem Kontaktabriss gekommen, so kann dies der Datenbank mitgeteilt werden, die dann anderen Fahrzeugen die Empfehlung geben kann, den Stromabnehmer in die abgebügelte Position zu steuern oder die Stromaufnahme geregelt abzuschalten.

Hinsichtlich der Ausgestaltung des straßengeführten Kraftfahrzeugs sowie der externen Datenbank wird auf die vorangegangenen Ausführungen voll Bezug genommen.

Die Erfindung wird nachfolgend anhand bevorzugter Ausführungsbeispiele näher erläutert. Die Figuren zeigen:
- Fig. 1: eine schematische Darstellung eines straßengeführten Kraftfahrzeugs mit Stromabnehmern für Oberleitungen,
- Fig. 2: ein schematisches Blockschaltbild einer Vorrichtung zur Steuerung eines Stromabnehmers und
- Fig. 3: eine schematische Darstellung einer Trennstelle zwischen zwei Teilnetzen.

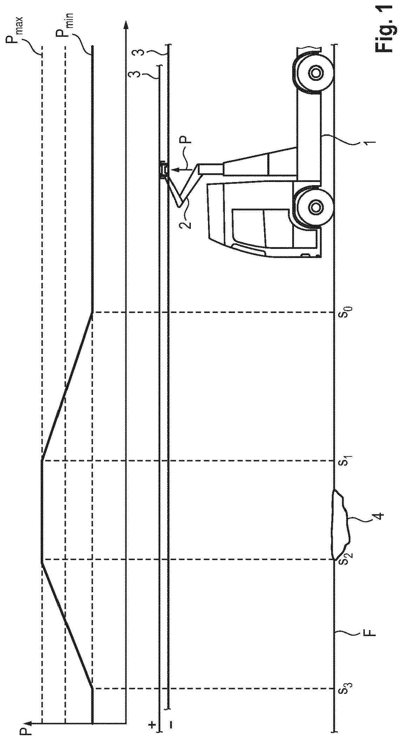

In der Fig. 1 ist ein straßengeführtes Kraftfahrzeug 1 mit zwei Stromabnehmern 2 zur Kontaktierung mit Oberleitungen 3 dargestellt, wobei in der Fig. 1 die Stromabnehmer 2 in einer angebügelten Position dargestellt sind. Sind beispielsweise keine Oberleitungen 3 vorhanden, so werden die Stromabnehmer 2 in eine eingefahrene, abgebügelte Position bewegt. In der angebügelten Position werden die Stromabnehmer 2 mit einer Anpresskraft P gegen die Oberleitungen 3 gedrückt.

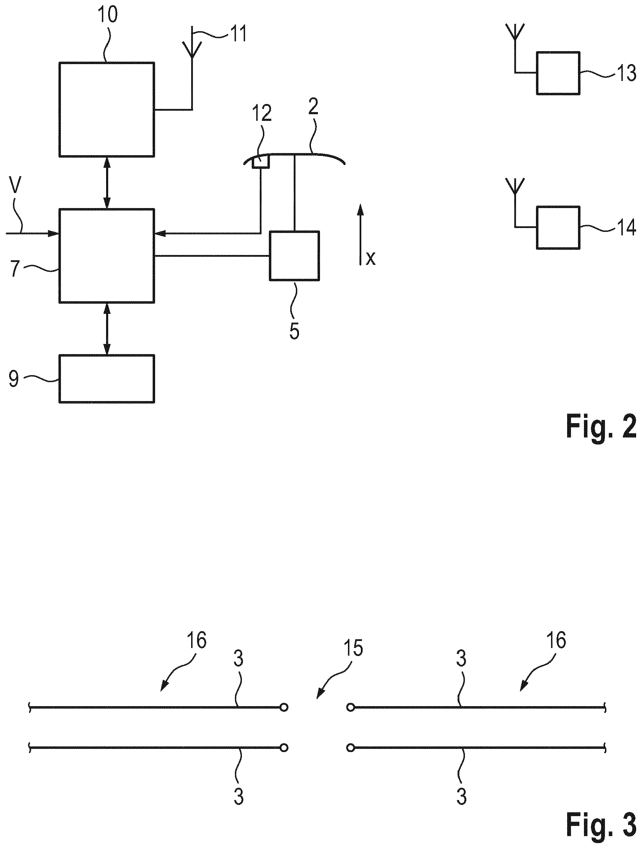

Weiter ist dargestellt, dass eine Fahrbahn F eine Fahrbahnunebenheit 4 in Form eines Schlaglochs aufweist. Die Fahrbahnunebenheit 4 stellt dabei eine lokale Störstelle dar. Das Kraftfahrzeug 1 erhält und von einer externen Datenbank Informationen über diese lokale Störstelle, insbesondere deren Position. Im oberen Bereich der Fig. 1 ist die Anpresskraft P über dem Ort dargestellt, wobei Pₘᵢₙ eine minimale Anpresskraft P und Pₘₐₓ eine maximale Anpresskraft P ist. Unter Berücksichtigung der Geschwindigkeit V (siehe Fig. 2) des Kraftfahrzeugs 1 und dem Abstand zum Schlagloch kann die verbleibende Zeit bis zum Erreichen des Schlaglochs berechnet werden. An der Position s₀ wird die Anpresskraft P rampenförmig erhöht, sodass an der Position s₁ kurz vor dem Schlagloch die maximale Anpresskraft Pₘₐₓ eingestellt ist. Mit dieser maximalen Anpresskraft Pₘₐₓ überfährt dann das Kraftfahrzeug 1 das Schlagloch und reduziert anschließend ab einer Position s₂ hinter dem Schlagloch rampenförmig die Anpresskraft P von der maximalen Anpresskraft Pₘₐₓ auf die minimale Anpresskraft Pₘᵢₙ, die dann an der Position s₃ erreicht ist. Durch die rampenförmige Erhöhung und Reduzierung der Anpresskraft P wird eine Schwingungsanregung der Oberleitung 3 verhindert bzw. reduziert. Durch die temporäre Erhöhung der Anpresskraft P kann dabei in den meisten Fällen ein Kontaktabriss aufgrund der Fahrbahnunebenheiten 4 verhindert werden.

In der Fig. 2 ist schematisch ein Blockschaltbild einer Vorrichtung zur Ansteuerung mindestens eines Stromabnehmers 2 dargestellt. Die Vorrichtung weist mindestens eine Aktorik 5 auf, mittels derer der Stromabnehmer 2 von einer dargestellten angebügelten Position in eine abgebügelte Position bewegt werden kann und umgekehrt. Mittels der Aktorik 5 kann der Stromabnehmer 2 in der angebügelten Position in x-Richtung bewegt werden, um so die Anpresskraft P einzustellen.

Alternativ oder ergänzend kann die Aktorik 5 auch ein Luftfedersystem sein, das das komplette Fahrzeug anhebt oder absenkt. Dabei kann die Anpresskraft durch das Maß der Anhebung gesteuert werden. Dabei kann vorgesehen sein, dass durch eine erste Aktorik 5 die Stromabnehmer 2 herunter- oder hochgeklappt werden, der eigentliche Anbügelungsvorgang jedoch nur durch das Luftfedersystem als zweite Aktorik 5 erfolgt. Auch ist es möglich, dass durch das Hochklappen der Stromabnehmer 2 bereits die Anbügelung erfolgt, wobei dann die Anpresskraft durch das Luftfedersystem gesteuert bzw. eingestellt wird.

Die Vorrichtung weist eine Auswerte- und Steuereinheit 7 auf, die die Aktorik 5 ansteuert. Weiter weist die Vorrichtung einen lokalen Speicher 9, ein Steuergerät 10 mit einer Luftschnittstelle 11 sowie mindestens einen Sensor 12 am Stromabnehmer 2 auf. Der Sensor 12 ist beispielsweise ein Druck- oder Kraftsensor, um die tatsächliche Anpresskraft P des Stromabnehmers 2 gegen die Oberleitung 3 (siehe Fig. 1) zu ermitteln oder zu erfassen.

Das Kraftfahrzeug 1 empfängt dann von der externen Datenbank 13 die Position einer lokalen Störstelle (beispielsweise einer Fahrbahnunebenheit 4). Die Auswerte- und Steuereinheit 7 wertet dann diese Information unter Berücksichtigung der Geschwindigkeit V aus und steuert dann die Aktorik 5 an, damit diese die Anpresskraft P, wie zu Fig. 1 erläutert, erhöht. Durch die Daten des Sensors 12 kann dabei die eingestellte Anpresskraft P überwacht werden.

Die Position der Fahrbahnunebenheit 4 sowie die dazugehörigen Steuerbefehle für die Aktorik 5 können dann in dem lokalen Speicher 9 abgelegt werden, sodass diese bei einem erneuten Befahren der Strecke bereits zur Verfügung stehen. Alternativ oder zusätzlich können diese Informationen von dem Steuergerät 10 über die Luftschnittstelle 11 an andere Kraftfahrzeuge 14 übermittelt werden.

Über die Luftschnittstelle 11 kann das Kraftfahrzeug 1 neue, unbekannte Störstellen an die Datenbank 13 übertragen sowie die Auswirkungen der vorgenommenen Ansteuerung der Aktorik 5 (also insbesondere, ob ein Kontaktabriss vermieden werden konnte).

Die Übertragung zwischen Kraftfahrzeug 1 und Datenbank 13 muss nicht direkt erfolgen, sondern kann auch über eine Cloud und/oder Infrastruktureinrichtungen entlang der Straße erfolgen.

Die Daten der Datenbank 13 können dabei auch weiteren Einrichtungen wie beispielsweise Straßenreparatur-Einrichtungen zur Verfügung gestellt werden. Diese können dann nach den vorgenommenen Ausbesserungsarbeiten dies wieder der Datenbank 13 zurückmelden, sodass deren Datenbasis aktualisiert wird.

In der Fig. 3 ist schematisch eine Trennstelle 15 zwischen zwei Teilnetzen 16 eines Oberleitungssystems mit Oberleitungen 3 als lokale Störstelle dargestellt. Diese Trennstellen 15 sind notwendig, damit der Spannungsabfall entlang der Oberleitung von einer Einspeisung ab begrenzt ist. An diesen Trennstellen 15 kann es dann ebenfalls zu Kontaktabrissen kommen. Der Ort solcher Trennstellen 15 ist vorab bekannt und kann in der Datenbank 13 gespeichert werden. Das Kraftfahrzeug 1 kann dann vor Erreichen der Trennstelle 15 gezielt abgebügelt werden oder aber die Stromaufnahme wird abgeregelt, um Lichtbögen zu vermeiden.

### Bezugszeichenliste

- 1: Kraftfahrzeug
- 2: Stromabnehmer
- 3: Oberleitung
- 4: Fahrbahnunebenheit
- 5: Aktorik
- 7: Auswerte- und Steuereinheit
- 9: lokaler Speicher
- 10: Steuergerät
- 11: Luftschnittstelle
- 12: Sensor
- 13: Datenbank
- 14: Kraftfahrzeug
- 15: Trennstelle
- 16: Teilnetz
- F: Fahrbahn
- P: Anpresskraft
- s₀-s₃: Position
- V: Geschwindigkeit

## Patentansprüche

1. Verfahren zum Ansteuern eines Stromabnehmers (2) eines straßengeführten Kraftfahrzeugs (1), mittels mindestens einer Aktorik (5), um den Stromabnehmer (2) von einer ersten abgebügelten Position in eine zweite angebügelte Position oder umgekehrt zu steuern und/oder um einen Anpressdruck (8) des Stromabnehmers (2) zu erhöhen oder zu erniedrigen,
**dadurch gekennzeichnet, dass**
in einer Datenbank (13) lokale Störstellen abgelegt sind, wobei der Stromabnehmer (2) in Abhängigkeit der lokalen Störstellen angesteuert wird.

2. Verfahren nach Anspruch 1, **dadurch gekennzeichnet, dass** die lokalen Störstellen Fahrbahnunebenheiten (4), Trennstellen (15) der Teilnetze (16) der Oberleitungen (3) und/oder lokale Störungen oder Änderungen der Oberleitungsführung sind.

3. Verfahren nach Anspruch 1 oder 2, **dadurch gekennzeichnet, dass** in Abhängigkeit der lokalen Störstelle der Stromabnehmer (2) von der zweiten angebügelten Position in die erste abgebügelte Position gesteuert wird oder die Stromübertragung geregelt abgeschaltet wird.

4. Verfahren nach Anspruch 3, **dadurch gekennzeichnet, dass** in Abhängigkeit der lokalen Störstelle ein Schwellwert, ab dem der Stromabnehmer (2) abgebügelt wird oder die Stromübertragung geregelt abgeschaltet wird, angepasst wird.

5. Verfahren nach einem der vorangegangenen Ansprüche, **dadurch gekennzeichnet, dass** in Abhängigkeit der lokalen Störstelle die Anpresskraft (8) des Stromabnehmers (2) erhöht oder erniedrigt wird.

6. Verfahren nach Anspruch 5, **dadurch gekennzeichnet, dass** die Anpresskraft (P) auf eine maximale Anpresskraft (Pₘₐₓ) eingestellt wird.

7. Verfahren nach einem der Ansprüche 5 oder 6, **dadurch gekennzeichnet, dass** Erhöhungen oder Verringerungen der Anpresskraft (P) rampenförmig erfolgen.

8. Verfahren nach einem der vorangegangenen Ansprüche, **dadurch gekennzeichnet, dass** das Kraftfahrzeug (1) Daten von unbekannten lokalen Störstellen an die Datenbank (13) überträgt und/oder Daten von abgefahrenen, lokalen Störstellen an die Datenbank (13) überträgt.

9. Verfahren nach einem der vorangegangenen Ansprüche, **dadurch gekennzeichnet, dass** das Kraftfahrzeug (1) lokale Störstellen und/oder daraus abgeleitete Stellgrößen an andere Kraftfahrzeuge (14) überträgt.

10. Verfahren nach einem der vorangegangenen Ansprüche, **dadurch gekennzeichnet, dass** die Datenbank (13) fahrzeugextern angeordnet und verwaltet wird, wobei die lokalen Störstellen an das straßengeführte Kraftfahrzeug (1) übertragen werden.

11. Verfahren nach einem der vorangegangenen Ansprüche, **dadurch gekennzeichnet, dass** die lokalen Störstellen in einer fahrzeugseitig angeordneten und verwalteten Datenbank abgelegt werden.

12. Straßengeführtes Kraftfahrzeug (1) mit mindestens einem Stromabnehmer (2) für mindestens eine Oberleitung (3) und mindestens einer Aktorik (5), wobei das Kraftfahrzeug (1) derart ausgebildet ist, dass mittels der Aktorik (5) der mindestens eine Stromabnehmer (2) von einer ersten abgebügelten Position in eine zweite angebügelte Position oder umgekehrt gesteuert wird und/oder der Anpressdruck (8) des Stromabnehmers (2) erhöht oder erniedrigt wird,
**dadurch gekennzeichnet, dass**
das Kraftfahrzeug (1) derart ausgebildet ist, lokale Störstellen von einer Datenbank (13) zu beziehen und den Stromabnehmer (2) in Abhängigkeit der lokalen Störstelle anzusteuern.

13. Datenbank (13), **dadurch gekennzeichnet, dass** die Datenbank (13) lokale Störstellen für Oberleitungen (3) speichert, wobei die Datenbank (13) derart ausgebildet ist, lokale Störstellen für Kraftfahrzeuge (1) bereitzustellen.
